# EUROPÄISCHE PATENTSCHRIFT

(11) **EP 2 700 802 B1**
(45) Veröffentlichungstag und Bekanntmachung des Hinweises auf die Patenterteilung: **02.08.2017**
(21) Anmeldenummer: 13179910.8
(22) Anmeldetag: 09.08.2013
(51) Int. Cl.: F24D 11/00, F24D 19/10, H01M 16/00

(54) **Blockheizkraftwerk mit integriertem Stromspeicher**
Combined heat and power plant with integrated power storage system
Centrale de cogénération avec un accumulateur d'électricité intégré

(30) Priorität: 20.08.2012 AT 9022012
(43) Veröffentlichungstag der Anmeldung: 26.02.2014
(60) Teilanmeldung: 17158068.1
(73) Patentinhaber: Vaillant GmbH, 42859 Remscheid (DE)
(72) Erfinder: Voigtländer, Carsten, 42929 Wermelskirchen (DE); Berg, Joachim, 42859 Remscheid (DE)
(74) Vertreter: Hocker, Thomas

(56) Entgegenhaltungen:
- EP-A1- 2 166 596
- EP-A2- 0 940 637
- WO-A1-03/087674
- DE-A1- 3 308 976
- DE-A1- 10 003 186
- DE-A1- 19 831 697
- DE-B3-102008 063 954
- US-A- 4 226 214
- Arbeitsgemeinschaft Industriebau e.V. (AGI): "Elektrotechnische Anlagen, Bautechnische Ausführung von Räumen für Batterien - Batterieräume", , AGI J 31, Februar 2003 (2003-02), XP002716135, Gefunden im Internet: URL:http://www.pfrommergmbh.de/de/pdf/AGI- Batterieraum.pdf [gefunden am 2013-11-08]

## Beschreibung

Die Erfindung bezieht sich auf ein Blockheizkraftwerk.

Blockheizkraftwerke (BHKWs) sind Aggregate, welche elektrischen Strom produzieren und hierbei die entstehende Wärme zu Heizzwecken (Brauchwasser und Heizung) nutzen. Bei BHKWs kommen zumeist Verbrennungsmotoren, Stirlingmotoren sowie Brennstoffzellen zum Einsatz. In der Regel ist jedoch der Bedarf an elektrischer und thermischer Energie weder proportional, noch zeitgleich. Daher werden zumeist BHKWs entweder so betrieben, dass die thermische Energie einen thermischen Speicher (meist Warmspeicher) zugeführt wird und aus diesem Speicher bei Bedarf Wärme entnommen wird. Auch kann das elektrische Netz als Puffer verwendet werden. Überschüssiger Strom wird in das Netz eingespeist; wird mehr Strom benötigt als produziert, so wird Strom aus dem Netz bezogen. Letztendlich kann auch überschüssige Wärme an die Umgebung abgegeben werden.

Beim Betrieb von BHKWs ist ferner zu beachten, dass gerade bei kleinen Verbrauchseinheiten wesentliche Spitzen im Stromverbrauch durch das Ein- und Ausschalten von Verbrauchern sowie kurzfristige Leistungsaufnahmen diverser Verbraucher auftreten. Häufig sind die BHKW-Aggregate derart träge, dass sie diesen Spitzen nicht folgen können.

Insgesamt ist heute aus wirtschaftlichen Erwägungen anzustreben, möglichst die gesamte erzeugte Energie (Strom und Wärme) im Objekt zu verbrauchen. Wenn zukünftig für Netzdienstleistungen, wie zum Beispiel die Bereitstellung von Spitzenlaststrom attraktive Vergütungen gezahlt werden, können dezentrale Blockheizkraftwerke auch als Einspeiser arbeiten.

DE 100 03 186 A1 offenbart ein Diesel-Blockheizkraftwerk mit einem als Wärmespeicher dienenden Brauchwasserspeicher und einem elektrochemischen Speicher. Die Anlage soll stets im Bereich eines möglichst hohen mechanischen Wirkungsgrades betrieben werden, um mit möglichst geringer Abwärme primär Strom zu erzeugen.

Aus EP 2 166 596 A1 ist ein Motor-Blockheizkraftwerk mit Elektrospeicher bekannt. Der Elektrospeicher dient dem Start der Anlage sowie zum Ausgleich von Schwankungen. Aus DE 33 08 976 A1 ist ein Motor-BHKW mit Elektrospeicher gemäß dem Oberbegriff von Anspruch 1 bekannt. Der Erfindung liegt die Aufgabe zugrunde, ein BHKW zu schaffen, das gegenüber diesem bekannten BHKW eine verbesserte Luftzirkulation aufweist. Erfindungsgemäß wird dies mittels eines erfindungsgemäßen Blockheizkraftwerks gemäß Anspruch 1 gelöst.

So ist bei einem Blockheizkraftwerk mit einem Aggregat zur Erzeugung von elektrischer und thermischer Energie, mit einer Regelung oder Steuerung und einem elektrischer Speicher zur Pufferung von Verbrauchsspitzen verbunden. Im Gegensatz zu einem Blockheizkraftwerk mit Starterbatterie verfügt das erfindungsgemäße Blockheizkraftwerk über einen Wechselrichter, so dass Gleichspannung des elektrischen Speichers netzgerecht aufbereitet werden kann. Der Speicher kann dabei Stromüberschuss aufnehmen und bei erhöhtem Strombedarf diesen kurz- und mittelfristig befriedigen und somit Verbrauchsspitzen puffern. Die Regelung oder Steuerung des Blockheizkraftwerk kann dieses wärmegeführt regeln oder steuern und den elektrischen Energieverbrauch über den elektrischen Speicher puffern.

Vorteilhafte Ausgestaltungen der Erfindung ergeben sich durch die Merkmale der abhängigen Ansprüche.

So ist es zur Stabilisierung der Anlage sinnvoll, den elektrischen Speicher mit einer Grundplatte, mit der zumindest die wesentlichen Komponenten direkt oder indirekt verbunden sind, zu verbinden, um die kinetische Trägheit zu erhöhen. Es ist zur Stabilisierung der Anlage weiterhin zweckmäßig, den elektrischen Speicher unterhalb des Aggregats zur Erzeugung von elektrischer und thermischer Energie anzuordnen. Ist der elektrische Speicher über Dämpfungselemente mit dem Aggregat zur Erzeugung von elektrischer und thermischer Energie verbunden, so können Aggregatsschwingungen gedämpft werden. Beide Komponenten müssen hierzu unterschiedliche Eigenfrequenzen aufweisen.

Das Verfahren zum Betreiben des erfindungsgemäßen Blockheizkraftwerks sieht einerseits vor, das Aggregat zur Erzeugung von elektrischer und thermischer Energie wärmegeführt zu betreiben und hierbei die Schwankungen des Stromverbrauchs über elektrische Speicher zu puffern. Andererseits kann das Blockheizkraftwerk derartig betrieben werden, dass es primär als Netzdienstleister dient und bei Strommangel im öffentlichen Netz Strom in dieses abgibt, während bei Stromüberschuss im öffentlichen Netz Strom im elektrischen Speicher aufgenommen wird und / oder Strom zu elektrischen Heizzwecken verwendet wird.

Dies kann gemäß aktueller Daten aus dem Netz, welche den tatsächlichen Bedarf wiedergeben oder nach hierfür typischen Bedingungen (z.B. Uhrzeiten) geschehen. Dabei können von zentraler Stelle mit einem Vorlauf von einigen Stunden beziehungsweise Tagen Fahrpläne übermittelt werden, die Zeitfenster für Mehr- oder Minderbedarf im Netz abbilden. Die Regelung kann auch aus den Daten der Vergangenheit lernen und die Ladekapazitäten derart zur Verfügung stellen, dass bei entsprechend erwartetem Bedarf Strom abgegeben oder aufgenommen werden kann.

Die Erfindung wird nun anhand der Figur detailliert erläutert. Hierbei zeigen
- Figur 1: das erfindungsgemäße Blockheizkraftwerk,
- Figur 2: den elektrischen Leistungsverlauf über die Zeit,
- Figur 3: eine Variante des erfindungsgemäßen Blockheizkraftwerks sowie
- Figur 4: eine Skizze des erfindungsgemäßen Blockheizkraftwerks im Strommarkt.

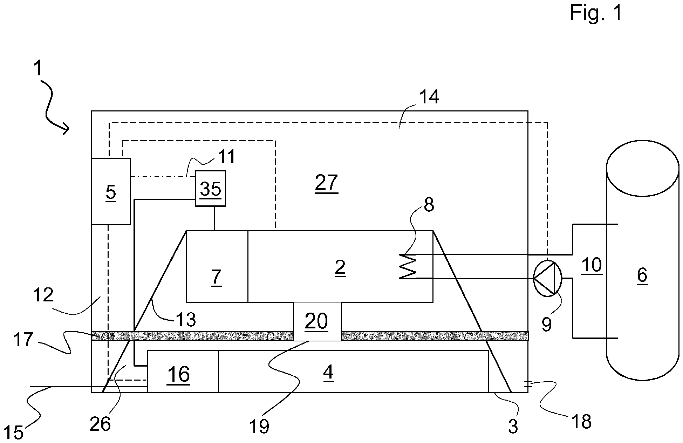

Figur 1 zeigt das erfindungsgemäße Blockheizkraftwerk 1 mit einem Aggregat 2 zur Erzeugung von elektrischer und thermischer Energie, welches von einer Aufhängung 13 in einem Gehäuse 14 gehalten wird. Bei dem Aggregat 2 kann es sich beispielsweise um einen Verbrennungsmotor, einen Stirlingmotor oder eine Brennstoffzelle handeln. Das Blockheizkraftwerk 1 verfügt ferner über eine Grundplatte 3, mit der zumindest die wesentlichen Komponenten direkt oder indirekt verbunden sind. Mit dieser ist unterhalb des Aggregats 2 zur Erzeugung von elektrischer und thermischer Energie ein elektrischer Speicher 4 verbunden. Der elektrische Speicher 4 ist mit einem Wechselrichter 16 verbunden. Der elektrische Speicher 4 kann optional, hier jedoch nicht dargestellt, über Dämpfungselemente mit dem Aggregat 2 zur Erzeugung von elektrischer und thermischer Energie angeordnet sein. Der elektrische Speicher 4 kann dabei sowohl mit dem Aggregat 2 oder der Grundplatte 3, als auch mit beiden verbunden sein. Ferner verfügt das Blockheizkraftwerk 1 über eine Regelung 5 oder Steuerung.

Das Aggregat 2 beinhaltet einen Generator 7 zur Stromproduktion, der über eine Leitung 11 mit der Regelung 5 verbunden ist. Von dieser Regelung 5 geht eine weitere Leitung 12 über einen ersten Wechselrichter 16 zum elektrischen Speicher 4. Eine weitere Leitung 15 führt vom ersten Wechselrichter 16 in das elektrische Netz. Der ersten Wechselrichter 16 sorgt für die Umwandlung von Gleichstrom des elektrischen Speichers 4 auf Wechselstrom mit der Frequenz sowie der Spannung des Netzes, also beispielsweise in Deutschland 230 Volt und 50 Hz. Der erste Wechselrichter 16 kann optional auch den Strom des Generators 7 für den elektrischen Speicher 4 aufbereiten. Der ersten Wechselrichter 16 im Sinne dieser Erfindung kann somit optional auch als Gleichrichter zur Aufbereitung des Ausgangswechselstroms eines Generators 7 in Gleichstrom dienen. Weiterhin kann optional ein zweiter Wechselrichter 35 am Ausgang des Generators 7 angeordnet sein, welcher den Ausgangsstrom des Generators 7 netzkonform (Deutschland 230 Volt und 50 Hz) aufbereitet. Wenn der Generator 7 Gleichstrom mit einer Spannung ähnlich der Spannung des elektrischen Speichers 4 produziert, kann auf eine Aufbereitung des Stroms verzichtet werden. Innerhalb des Aggregats 2 ist ein Wärmetauscher 8 angeordnet, der über einen Heizkreislauf 10 mit einer Umwälzpumpe 9 mit einem Warmwasserspeicher 6 verbunden ist.

Da insbesondere ein Verbrennungsmotor-BHKW viel Wärme abstrahlt, ist vorgesehen, dass das Aggregat 2 und der elektrische Speicher 4 durch eine wärmedämmende Trennwand 17 voneinander getrennt sind. Weiterhin verfügt der Raum im Gehäuse 14, in dem sich der elektrische Speicher 4 befindet, der Batterieraum 26 über eine erste Öffnung 18 zum Aufstellraum. Die Trennwand 17 verfügt über eine zweite Öffnung 19 zum Raum, in dem sich das Aggregat 2 befindet, den Kraft-Wärme-Aggregatsraum 27. Der Batterieraum 26 verfügt über eine weitere Aufstellraumöffnung 21 zum Aufstellraum. Die mindestens zwei Öffnungen 18, 21 sind vertikal übereinander angeordnet oder haben zumindest eine nennenswerte vertikale Erstreckung, so dass es durch den thermischen Auftrieb auch ohne Gebläse zu einer Luftzirkulation kommen kann. Befindet sich eine zweite Öffnung 19 in der Trennwand 17, so kann die für das Aggregat benötigte Luft über den Batterieraum 26 angesaugt werden, so dass dieser gekühlt wird.

Je höher die Spannung eines elektrischen Speichers 4 ist, desto geringer muss - bei gleicher Leistung - der Strom ausfallen. Hierdurch lässt sich der notwendige Querschnitt der Leitungen verringern. Die Spannung des elektrischen Speichers 4 sollte vorzugsweise mindestens 24 Volt betragen, wobei mehrere Speichermodule in Reihe geschaltet werden können.

Beim Betrieb des Blockheizkraftwerks 1 regelt die Regelung 5 das Blockheizkraftwerk 1 mit dem Aggregat 2 zur Erzeugung von elektrischer und thermischer Energie vorwiegend wärmegeführt und puffert den elektrischen Energieverbrauch über den elektrischen Speicher 4. Hierbei lädt die Regelung 5 bei Stromüberschuss den elektrischen Speicher 4 und bei Strommangel zieht sie Strom aus dem elektrischen Speicher 4. Die Regelung 5 regelt zu bestimmten Zeiten das Aggregat 2 zur Erzeugung von elektrischer und thermischer Energie derart, dass vorwiegend der Warmwasserspeicher 6 sowie der elektrische Speicher 4 geladen wird, damit zu späteren Zeiten eine erhöhte Energiemenge zur Verfügung steht und diese nicht aus dem öffentlichen Netz bezogen werden muss. Die Regelung 5 oder Steuerung ermittelt diese bestimmten Zeiten, indem sie Zeiten hohen Energiebedarfs ermittelt und später den Warmwasserspeicher 6 sowie den elektrische Speicher 4 derartig lädt oder entlädt, dass Strom und Wärme bedarfsgerecht zur Verfügung gestellt sowie aufgenommen werden kann.

Steht das Blockheizkraftwerk 1 beispielsweise in einem Wohnhaus, so lädt morgens vor dem Aufstehen der Bewohner das Blockheizkraftwerk 1 sowohl den Warmwasserspeicher 6, als auch den elektrischen Speicher 4. Somit steht am Morgen für die Bewohner beispielsweise für das Duschen Warmwasser in ausreichender Menge zur Verfügung. Zugleich ist der elektrische Speicher 4 derart geladen, dass der gleichzeitige Betrieb mehrerer Haushaltsgeräte einerseits durch den Generator 7, als auch den elektrischen Speicher 4 bedient werden kann. Der elektrische Speicher 4 und der Generator 7 können parallel an die elektrische Leitung 15 zum elektrischen Netz angeschlossen sein. Der elektrische Speicher 4 und der Generator 7 können aber auch derart miteinander verbunden und über die Regelung 5 angesteuert werden, dass je nach Bedarf individuell regelbare Ströme bezüglich beider elektrischer Quellen beziehungsweise Senken fließen können.

Haben die meisten Hausbewohner das Haus verlassen, so wird normalerweise weniger Strom und Wärme benötigt. Der elektrische Speicher 4 und der Warmwasserspeicher 6 können wieder geladen werden. Es ist auch möglich, den Warmwasserspeicher 6 zu laden und beispielsweise zu Spitzenzeiten den Strom in das öffentliche Netz abzugeben.

Der Strombedarf kann aufgezeichnet und ausgewertet werden. So kann dann eine elektrische Speicherladung antizipierend erfolgen, wenn statistisch danach ein erhöhter Verbrauch erwartet wird. Hierzu können eine Vielzahl von Tagen ausgewertet werden. Hierbei kann zwischen Wochentagen und Wochenenden unterschieden werden. Auch die Eingabe von Daten der Wettervorhersage oder zentral vorgegebene und übermittelte Fahrpläne können berücksichtigt sein.

Durch den Aufbau mit elektrischem Speicher 4 kann das Blockheizkraftwerk 1 auch die Funktion eines Notstromaggregats übernehmen.

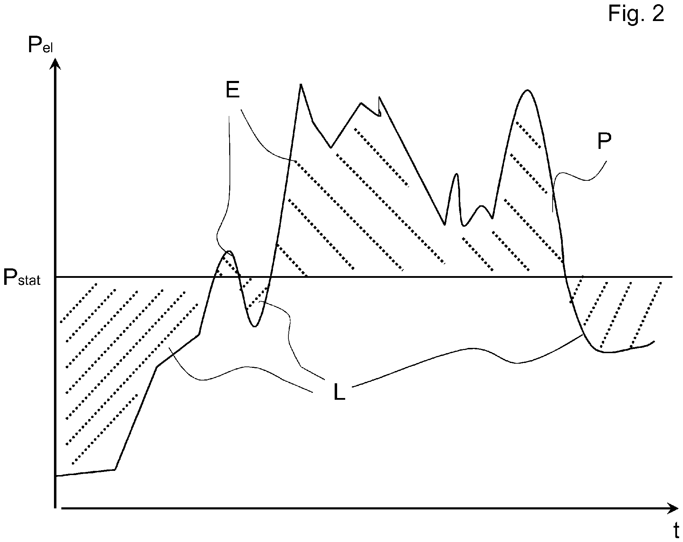

Figur 2 zeigt den Verlauf der elektrischen Leistung Pₑₗ über der Zeit t. Es wird eine Leistung P gemäß dem Linienverlauf benötigt; der Generator 7 stellt eine Leistung Pₛₜₐₜ zur Verfügung. Ist die produzierte Leistung Pₛₜₐₜ größer als die Leistung P, so wird die Differenz zum Laden des elektrischen Speichers 4 genutzt; dies ist im Diagramm mit den Flächen L dargestellt. Ist die produzierte Leistung Pₛₜₐₜ kleiner als die Leistung P, so wird die Differenz, die im Diagramm mit den Flächen E dargestellt ist, durch Entladen des elektrischen Speichers 4 entnommen. Das Aggregat 2 kann dabei mit konstanter Leistung oder modulierend, also mit veränderbarer Leistung, betrieben werden.

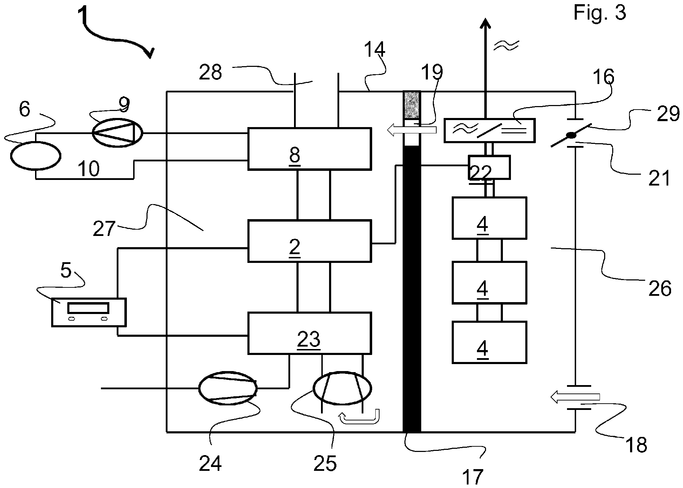

Figur 3 zeigt ein weiteres Blockheizkraftwerk 1 mit einem Gehäuse 14 sowie Batterieraum 26 sowie Kraft-Wärme-Aggregatsraum 27. Im Kraft-Wärme-Aggregatsraum 27 befindet sich ein Aggregat 2 zur Erzeugung von elektrischer und thermischer Energie, wobei es sich in diesem Fall um eine Brennstoffzelle handelt. Dem Aggregat 2 ist ein Reformer 23 zur Erzeugung von Prozessgas vorgeschaltet. Der Reformer 23 verfügt über eine Brenngaszufuhr mit Kompressor 24 oder Gebläse. Ferner ist ein Verbrennungsluftgebläse 25 für die Luftansaugung vorhanden. Alternativ kann auch ein Saugzuggebläse im Abgasweg 28 zum Einsatz kommen. Die Abgase des Aggregats 2 werden in einen Wärmetauscher 8 geleitet, wo sie Wärme auf einen Heizkreislauf 10 mit Umwälzpumpe 9 und Warmwasserspeicher 6 übertragen, ehe sie über eine Abgasleitung in die Umgebung geleitet werden. Das Brennstoffzellen-Aggregat 2 ist mit einem DC-Controller / Ladegerät 22 im Batterieraum 26 verbunden. Das DC-Controller / Ladegerät 22 ist sowohl mit einem Wechselrichter 16, als auch 3 parallel geschalteten elektrischen Speichern 4 verbunden. Wie in Figur 1, so ist auch hier eine Regelung 5 mit allen elektrisch steuerbaren Vorrichtungen und Sensoren verbunden. Eine zweite optionale Aufstellraumöffnung 21, in der sich optional eine Drosselklappe 29 befindet, kann im oberen Bereich des Batterieraums 26 angeordnet sein. Bei Bedarf kann die Drosselklappe 29 geöffnet werden, damit durch freie Konvektion der Batterieraum gekühlt wird. Ist die Drosselklappe 29 geschlossen, so wird die gesamte im Batterieraum 26 erwärmte Luft in den Kraft-Wärme-Aggregatsraum 27 geleitet. Je nach Bedarf kann die Drosselklappe 29 auch eine Zwischenstellung einnehmen.

Beim Betrieb des Blockheizkraftwerks 1 saugt das Verbrennungsluftgebläse 25 Über die erste Öffnung 18 Verbrennungsluft aus dem Aufstellraum an. Die Luft strömt durch den Batterieraum 26 und kühlt dabei die elektrischen Speicher 4, den DC-Controller / Ladegerät 22 sowie den Wechselrichter 16 und strömt dann durch die zweite Öffnung 19 in der Trennwand 17, um dann über das Verbrennungsluftgebläse 25 in den Reformer 23 zu gelangen. Im Reformer 23 wird die Luft zusammen mit Brenngas, das über die Brenngaszufuhr und den Kompressor 24 in den Reformer 23 gelangt zu Prozessgas aufbereitet. Dieses Prozessgas wird im Brennstoffzellen-Aggregat 2 in elektrischen Strom und Wärme umgewandelt. Der elektrische Strom gelangt in Form von Gleichstrom zum DC-Controller / Ladegerät 22, welcher den Strom für den elektrischen Speicher 4 sowie den Wechselrichter 16 aufbereitet. Der Wechselrichter 16 wandelt den Strom in Wechselspannung 230 V für das öffentliche Netz um. Die Abwärme des Brennstoffzellen-Aggregats 2 wird über den Wärmetauscher 8 auf den Heizkreislauf 10 mit dem Warmwasserspeicher 6 sowie der Umwälzpumpe 9 übertragen. Über eine Abgasleitung 28 gelangen die abgekühlten Abgase in die Umgebung.

Das Blockheizkraftwerk 1 kann nach mehreren Strategien betrieben werden. So ist es, wie bereits beschrieben, möglich, das Blockheizkraftwerk 1 vorwiegend gemäß dem eigenen Wärmebedarf des Heizkreislaufs 10 zu regeln und die Spannungsspitzen, welche nicht mit dem Wärmebedarf korreliert, im elektrischen Speicher 4 zu puffern und bei Bedarf abzurufen. Der Austausch mit dem öffentlichen Netz wird hierbei vermieden. Vorrang hat der Eigenverbrauch im Haus. Wenn mehr Strom erzeugt als benötigt wird, wird der Strom in dem elektrischen Speicher 4 zwischengespeichert. Wenn weniger Strom erzeugt als benötigt wird, wird der Strom aus dem elektrischen Speicher 4 entnehmen. Strombezug aus dem Netz und Einspeisung in das öffentliche Netz wird dabei vermieden.

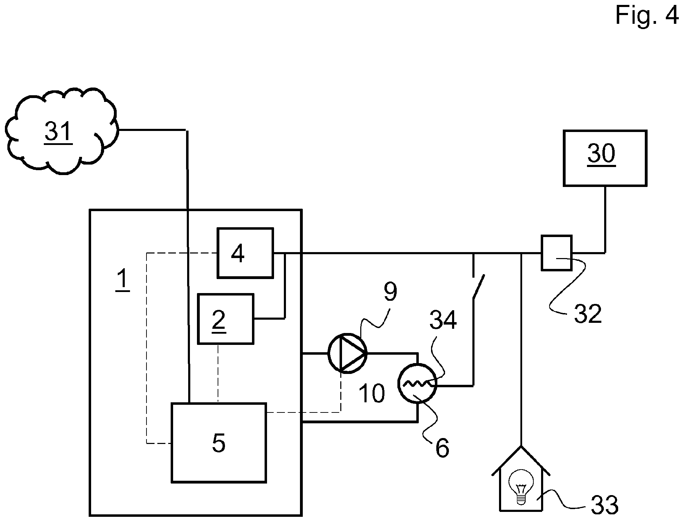

Eine weitere Möglichkeit besteht darin, das Blockheizkraftwerk 1 im Sinne eines Netzdienstleisters zu betreiben. Dies ist in Figur 4 dargestellt. Figur 4 zeigt das Blockheizkraftwerk 1, das mit dem öffentlichen Stromnetz 30 über einen Zähler 32 und Informationen des Strommarkts 31 verbunden ist. Ferner ist das Blockheizkraftwerk 1 mit häuslichen elektrischen Verbrauchern 33 verbunden. Letztendlich ist ein elektrischer Heizer 34 im Warmwasserspeicher 6 über einen Schalter, der mit der Regelung 5 verbunden ist, mit der Stromleitung verbunden.

Das Blockheizkraftwerk 1 wird so betrieben, dass bei Strommangel im öffentlichen Netz das Blockheizkraftwerk 1 dem öffentlichen Stromnetz 30 elektrische Leistung zur Verfügung stellt. Die entsprechenden Daten können über das Stromnetz, über eine Telekommunikationsleitung, per Funksignal oder in einer anderen Form von einer zentralen Koordinationsstelle (z.B. Strombörse Leipzig) übertragen werden. Informationen des Strommarkts 31 gelangen zum Energiemanager, der Teil der Regelung 5 ist. Bei Strommangel im öffentlichen Stromnetz 30 und entsprechend hohen Einspeisevergütungen wird Strom aus dem Blockheizkraftwerk 1 und dem elektrischen Speicher 4 in das öffentliche Stromnetz 30 eingespeist. Hingegen wird bei Stromüberschuß im öffentlichen Stromnetz 30 und extrem niedrigem Strompreise im Strommarkt 31 das Blockheizkraftwerk 1 heruntergefahren oder ausgeschaltet. Optional kann sogar billiger Netzstrom aus dem öffentlichen Stromnetz 30 bezogen werden und in den elektrischen Speicher 4 geladen werden. Optional wird über den elektrischen Heizer 34 in dem Warmwasserspeicher 6 billiger Strom zu Heizzwecken verwendet. In Extremfällen herrscht am Strommarkt 31 ein derartiger Stromüberschuss, dass für die Abnahme von Strom aus dem öffentlichen Stromnetz 30 eine Vergütung bezahlt wird. Gerade dann ist eine Speicherung im elektrischen Speicher 4 und / oder ein elektrisches Beheizen des Warmwasserspeicher 6 finanziell ratsam.

### Bezugszeichenliste

- 1: Blockheizkraftwerk
- 2: Aggregat zur Erzeugung von elektrischer und thermischer Energie
- 3: Grundplatte
- 4: elektrischer Speicher
- 5: Regelung
- 6: Warmwasserspeicher
- 7: Generator
- 8: Wärmetauscher
- 9: Umwälzpumpe
- 10: Heizkreislauf
- 11: Leitung
- 12: Leitung
- 13: Aufhängung
- 14: Gehäuse
- 15: Leitung
- 16: erster Wechselrichter
- 17: Trennwand
- 18: erste Öffnung
- 19: zweite Öffnung
- 20: Luftkanal
- 21: Aufstellraumöffnung
- 22: DC-Controller / Ladegerät
- 23: Reformer
- 24: Brenngaszufuhr
- 25: Verbrennungsluftgebläse
- 26: Batterieraum
- 27: Kraft-Wärme-Aggregatsraum
- 28: Abgasleitung
- 29: Drosselklappe
- 30: öffentliches Stromnetz
- 31: Strommarkt
- 32: Stromzähler
- 33: häuslichen elektrischen Verbrauchern
- 34: elektrischer Heizer
- 35: zweiter Wechselrichter

## Patentansprüche

1. Blockheizkraftwerk (1) mit einem Aggregat (2) zur Erzeugung von elektrischer und thermischer Energie, mit einer Regelung (5) oder Steuerung und mit einem Gehäuse (14), wobei innerhalb des Gehäuses (14) ein elektrischer Speicher (4) und ein Wechselrichter (16) angeordnet sind, wobei zwischen einem Kraft-Wärme-Aggregatsraum (27), in dem sich das Aggregat (2) zur Erzeugung von elektrischer und thermischer Energie befindet und einem Batterieraum (26), in dem sich der elektrischen Speicher (4) befindet, eine Trennwand (17), welche wärmedämmend ist, angeordnet ist, der Batterieraum (26) über mindestens eine erste Öffnung (18) zum Aufstellraum verfügt, der Batterieraum (26) über mindestens eine weitere zweite Öffnung (19) verfügt, welche den Batterieraum (26) mit dem Kraft-Wärme-Aggregatsraum (27) verbindet und der Batterieraum (26) über mindestens eine weitere Aufstellraumöffnung (21) zum Aufstellraum verfügt, **dadurch gekennzeichnet, dass** die beiden Öffnungen (18, 21) vertikal übereinander angeordnet sind oder zumindest über eine nennenswerte vertikale Erstreckung verfügen, wobei in der Aufstellraumöffnung (21) eine verstellbare Drosselklappe (29) angeordnet ist.

2. Blockheizkraftwerk (1) nach Anspruch 1, **dadurch gekennzeichnet, dass** die zweite Öffnung (19) über einen Luftkanal (20) mit dem Aggregat (2) zur Erzeugung von elektrischer und thermischer Energie verbunden ist.

3. Blockheizkraftwerk (1) nach einem der Ansprüche 1 oder 2, **dadurch gekennzeichnet, dass** in dem Raum im Gehäuse (14), in dem sich der elektrische Speicher (4) befindet, auch der Wechselrichter (16) und / oder ein DC-Controller/Ladegerät (22) angeordnet ist.

4. Blockheizkraftwerk (1) nach einem der Ansprüche 1 bis 3,
**dadurch gekennzeichnet, dass** der Wechselrichter (16) Gleichstrom des elektrischen Speichers in Wechselstrom mit Netzspannung und Netzfrequenz und / oder Wechselstrom mit Netzspannung und Netzfrequenz in Gleichstrom umwandelt.

5. Blockheizkraftwerk (1) nach einem der Ansprüche 1 bis 4 mit einer Grundplatte (3), mit der zumindest die wesentlichen Komponenten direkt oder indirekt verbunden sind, **dadurch gekennzeichnet, dass** mit dieser Grundplatte (3) der elektrischer Speicher (4) verbunden ist.

6. Blockheizkraftwerk (1) nach einem der Ansprüche 1 bis 5,
**dadurch gekennzeichnet, dass** der der elektrische Speicher (4) unterhalb des Aggregats (2) zur Erzeugung von elektrischer und thermischer Energie angeordnet ist.

7. Blockheizkraftwerk (1) nach einem der Ansprüche 1 bis 6,
**dadurch gekennzeichnet, dass** der der elektrische Speicher (4) über Dämpfungselemente mit dem Aggregat (2) zur Erzeugung von elektrischer und thermischer Energie angeordnet ist.

8. Blockheizkraftwerk (1) nach einem der Ansprüche 1 bis 7,
**dadurch gekennzeichnet, dass** das Aggregat (2) zur Erzeugung von elektrischer und thermischer Energie ein Verbrennungsmotor, Stirlingmotor oder eine Brennstoffzelle ist.

9. Blockheizkraftwerk (1) nach einem der Ansprüche 1 bis 8, **dadurch gekennzeichnet, dass** der elektrischen Speicher (4) über eine Spannung von mindestens 24 Volt verfügt.

## Claims

1. Combined heat and power plant (1) with an aggregate (2) for generating electrical and thermal energy, a regulating unit (5) or control unit and with a housing (14), wherein an electrical storage device (4) and an inverter (16) are arranged inside the housing (14), wherein a partition wall (17) is arranged between a heat-power-aggregate chamber (27), in which the aggregate (2) for generating electrical and thermal energy is located, and a battery chamber (26), in which the electrical storage device (4) is located, the partition wall being heat-insulating, the battery chamber (26) comprises at least a first opening (18) to the installation chamber, the battery chamber (26) comprises at least a further second opening (19) connecting the battery chamber (26) to the heat-power-aggregate chamber (27), and the battery chamber (26) comprises at least one further installation chamber opening (21) to the installation chamber, **characterised in that** the two openings (18, 21) are arranged vertically one on top of the other or have at least a significant vertical separation, wherein an adjustable throttle valve (29) is arranged in the installation chamber opening (21).

2. Combined heat and power plant (1) according to claim 1, **characterised in that** the second opening (19) is connected to the aggregate (2) for generating electrical and thermal energy via an air channel (20).

3. Combined heat and power plant (1) according to any of claims 1 or 2, **characterised in that** the inverter (16) and/or a DC controller/charger (22) is also arranged in the chamber in the housing (14) in which the electrical storage device (4) is located.

4. Combined heat and power plant (1) according to any of claims 1 to 3, **characterised in that** the inverter (16) converts direct current of the electrical storage device into alternating current with voltage and mains frequency and/or converts alternating current with voltage and mains frequency into direct current.

5. Combined heat and power plant (1) according to any of claims 1 to 4, with a base plate (3) directly or indirectly connecting at least the essential components, **characterised in that** the electrical storage device (4) is connected to this base plate (3).

6. Combined heat and power plant (1) according to any of claims 1 to 5, **characterised in that** the electrical storage device (4) is arranged below the aggregate (2) for generating electrical and thermal energy.

7. Combined heat and power plant (1) according to any of claims 1 to 6, **characterised in that** the electrical storage device (4) is arranged over damping elements with the aggregate (2) for generating electrical and thermal energy.

8. Combined heat and power plant (1) according to any of claims 1 to 7, **characterised in that** the aggregate (2) for generating electrical and thermal energy is a combustion engine, a Stirling engine or a fuel cell.

9. Combined heat and power plant (1) according to any of claims 1 to 8, **characterised in that** the electrical storage device (4) has a voltage of at least 24 volts.

## Revendications

1. Centrale de cogénération (1) avec un groupe (2) destiné à la production d'énergie électrique et thermique, avec une régulation (5) ou commande et avec une carcasse (14),
dans laquelle un accumulateur électrique (4) et un onduleur (16) sont agencés à l'intérieur de la carcasse (14)
et dans laquelle une paroi de séparation (17) qui est thermiquement isolante est agencée entre un espace de groupe force-chaleur (27), dans lequel se trouve le groupe (2) destiné à la production d'énergie électrique et thermique, et un espace de batterie (26), dans lequel se trouve l'accumulateur électrique (4), l'espace de batterie (26) disposant d'au moins une première ouverture (18) vers l'espace d'installation, l'espace de batterie (26) disposant d'au moins une autre deuxième ouverture (19) qui relie l'espace de batterie (26) à l'espace de groupe force-chaleur (27) et l'espace de batterie (26) disposant d'au moins une autre ouverture d'espace d'installation (21) vers l'espace d'installation, **caractérisée en ce que** les deux ouvertures (18, 21) sont agencées verticalement l'une au-dessus de l'autre ou présentent au moins une extension verticale notable, un clapet d'étranglement (29) réglable étant agencé dans l'ouverture d'espace d'installation (21).

2. Centrale de cogénération (1) selon la revendication 1, **caractérisée en ce que** la deuxième ouverture (19) est reliée par l'intermédiaire d'un canal d'air (20) au groupe (2) destiné à la production d'énergie électrique et thermique.

3. Centrale de cogénération (1) selon l'une des revendications 1 ou 2, **caractérisée en ce que** l'onduleur (16) et/ou un appareil contrôleur/chargeur (22) sont aussi agencés dans l'espace dans la carcasse (14) dans lequel se trouve l'accumulateur électrique (4).

4. Centrale de cogénération (1) selon l'une des revendications 1 à 3, **caractérisée en ce que** l'onduleur (16) convertit du courant continu de l'accumulateur électrique en courant alternatif avec tension de réseau et fréquence de réseau ou du courant alternatif avec tension de réseau et fréquence de réseau en courant continu.

5. Centrale de cogénération (1) selon l'une des revendications 1 à 4, avec une plaque de base (3) à laquelle au moins les composants essentiels sont reliés directement ou indirectement, **caractérisée en ce que** l'accumulateur électrique (4) est relié à cette plaque de base (3).

6. Centrale de cogénération (1) selon l'une des revendications 1 à 5, **caractérisée en ce que** l'accumulateur électrique (4) est agencé au-dessous du groupe (2) destiné à la production d'énergie électrique et thermique.

7. Centrale de cogénération (1) selon l'une des revendications 1 à 6, **caractérisée en ce que** l'accumulateur électrique (4) est agencé au-dessus d'éléments amortisseurs avec le groupe (2) destiné à la production d'énergie électrique et thermique.

8. Centrale de cogénération (1) selon l'une des revendications 1 à 7, **caractérisée en ce que** le groupe (2) destiné à la production d'énergie électrique et thermique est un moteur à combustion interne, un moteur Stirling ou une pile à combustible.

9. Centrale de cogénération (1) selon l'une des revendications 1 à 8, **caractérisée en ce que** l'accumulateur électrique (4) dispose d'une tension d'au moins 24 Volt.
